# EUROPEAN PATENT APPLICATION

(11) **EP 4 257 563 A1**
(43) Date of publication of application: **11.10.2023**
(21) Application number: 22167294.2
(22) Date of filing: 08.04.2022
(51) Int. Cl.: C03C 4/18, C03C 3/21, C03C 10/00, C04B 35/447, H01M 10/0562

(54) **LITHIUM-ION CONDUCTIVE GLASS-CERAMICS AND THEIR PRODUCTION**

(71) Applicant: Ferro GmbH, 60327 Frankfurt am Main (DE)
(72) Inventor: Gödeke, Dieter, 60327 Frankfurt am Main (DE); Sabieri, Ali, 60327 Frankfurt am Main (DE); Jarnicki, Holger, 60327 Frankfurt am Main (DE)
(74) Representative: Gille Hrabal Partnerschaftsgesellschaft mbB Patentanwälte

(57) **Abstract**

Described is a lithium-ion conducting glass ceramic, comprising as a first crystalline phase Li_{1.1+x+y}AlₓLa_{y}Ti_{1.3+(x+y)}(PO₄)₃ with x being 0 to 0.4, and y being 0.2 to 0.4; and as a second crystalline phase lanthanum phosphate. Moreover, the use of these glass ceramics in a battery, in particular an all-solid-state battery, a solid electric cell or a lithium-ion conducting separator.

## Description

The present invention relates to a lithium-ion conducting glass ceramic and a method of producing the lithium-ion conducting glass ceramic. Furthermore, the present invention relates to all-solid-state batteries, solid electric cells, and lithium ion conducting separators comprising said lithium-ion conducting glass ceramic. Finally, the present invention relates to the use of the lithium-ion conducting glass ceramic in all-solid-state batteries, solid electric cells, and lithium ion conducting separators.

NASICON is an acronym for sodium (Na) Super Ionic Conductor, which usually refers to a family of solids with the chemical formula Na₁₊ₓZr₂SiₓP₃₋ₓO₁₂ with 0 < x < 3. In a broader sense, it is also used for similar compounds where Na, Zr and/or Si are replaced by isovalent elements. NASICON compounds have high ionic conductivities, on the order of 10⁻³ S/cm, which rival those of liquid electrolytes. They are caused by hopping of Na ions among interstitial sites of the NASICON crystal lattice.

Some lithium phosphates also possess the NASICON structure and can be considered as the direct analogues of the sodium-based NASICONs. The general formula of such compounds is LiM₂(PO₄)₃, where M identifies an element like titanium, germanium, zirconium, hafnium, or tin.

Lithium titanium phosphate, with general formula LiTi₂(PO₄)₃ (LTP or LTPO), is another lithium-containing NASICON material in which TiO₆ octahedra and PO₄ tetrahedra are arranged in a rhombohedral unit cell. The LTP crystal structure is stable down to 100 K and is characterized by a small coefficient of thermal expansion. LTP shows low ionic conductivity at room temperature, around 10⁻⁶ S/cm; however, it can be effectively increased by elemental substitution with isovalent or aliovalent elements (Al, Cr, Ga, Fe, Sc, In, Lu, Y, La). The most common derivative of LTP is lithium aluminium titanium phosphate (LATP), whose general formula is Li₁₊ₓAlₓTi₂₋ₓ(PO₄)₃.

Ionic conductivity values as high as 1.9 x 10⁻³ S/cm can be achieved when the microstructure and the aluminium content (x = 0.3 - 0.5) are optimized. The increase of conductivity is attributed to the larger number of mobile lithium ions necessary to balance the extra electrical charge after Ti⁴⁺ replacement by Al³⁺, together with a contraction of the c axis of the LATP unit cell.

In spite of attractive conduction properties, LATP is highly unstable in contact with lithium metal, with formation of a lithium-rich phase at the interface and with reduction of Ti⁴⁺ to Ti³⁺. Both phenomena are responsible for a significant increase of the ionic conductivity of the LATP material (from 3 x 10⁻⁹ S/cm to 2.9 x 10⁻⁶ S/cm), leading to the degradation of the material and to the ultimate cell failure if LATP is used as a solid electrolyte in a lithium-ion battery with metallic lithium as the anode.

However, LATP materials are nevertheless of high interest in the underlying technical field due to its high ionic conductivity 10⁻⁴- 10⁻³ S x cm⁻¹ and handleability in ambient air.

Lithium aluminium titanium phosphate (LATP) are known from the prior art.

US 4,985,317 describes mixtures of Li₁₊ₓMₓTi₂₋ₓ(PO₄)₃ materials (with M = Fe, Al, Sc, Y, or La), Li₁₊ₓTi₂₋ₓSi_{y}P3_{-y}O₁₂ and LiTi₂(PO₄)₃ which requires difficult production procedure. The Process described in said prior art uses a sintering process for the preparation of the composite material and requires a high temperature of sintering due to a large amount of a crystalline phase.

US 2003/0205467 A describes a material containing also a minor content of P₂O₅ in an amount of 26 mol% onwards. However, a content of SiO₂ of more than 0.5 mol% is required and the sinterability of the described material is not described. Furthermore, the TiO₂ content is over-stoichiometric adjusted compared to the classical LATP crystal formula.

DE 10 2018 102 387 A intends to overcome the difficulties by adding B₂O₃ to the composition, with B₂O₃ > 0.2wt% to achieve a rest glass phase with high ionic conductivity. However, studies of the present inventors revealed that B₂O₃ enhances the crystallization in this system, leading to unwanted crystalline phases.

In US 6,030,909 a lithium-ion conducting glass ceramic is described. Here GeO₂ is used as replacement for TiO₂ to improve the conductivity. GeO₂ is more costly than La₂O₃.

The substitution of La into the LATP glass ceramic has been also published in Chen et al., Key Engineering Materials, Vol 509 (2012), 314-320. However, the Al₂O₃ content of 6 mol% is very high leading to the disadvantage of higher process temperatures. Moreover, high contents of Al₂O₃ inhibit LATP crystallization.

One further material of the art is defined by the general chemical structure Li₁₊ₓAlₓTi₂₋ₓ(PO₄)₃ with x = 0.3. These materials are difficult to produce via the melting route, due to rapid crystallization, high sintering temperatures and multiple phase formations during casting and later sintering at the peak crystallization temperature of the LATP crystal phase. Moreover, in Yu et al., Functional material letters, Vol 9, 5 (2016) 1650066, unwanted AlPO₄ phase is described which evolves at higher temperatures of above 800 °C und has no contribution to the overall electrical conductivity. Both the high sintering temperatures and the formation of unwanted phases, in particular of phases which do not contribute to the overall electrical conductivity, provides disadvantages.

The article "Preparation and Characterization of superionic conductive Li2O-Al2O3-La2O3-TiO2-P2O5 glass-ceramics," Key Engineering Materials, Vol. 509 (2012), 314-320 discloses the fabrication of Li₂O-Al₂O₃-La₂O₃-TiO₂-P₂O₅ glass-ceramics through heat-treatment. The results provided by differential scanning calorimetry (DSC), X-ray diffraction (XRD), scanning electron microscopy (SEM) and electrochemical workstation show that the prepared Li₂O-Al₂O₃-La₂O₃-TiO₂-P₂O₅ glass-ceramics consists of dominating LiTi₂(PO₄)₃ phases, trifle AlPO₄, TiO₂ and further unknown phases. The presence of the unknown phases in these glass-ceramics is unwanted because it is fully unclear whether they contribute to the overall electrical conductivity. Moreover, the sintering behaviour of the resulting material is not examined in this publication and measurements for the reduction of the sintering temperature are not addressed therein.

In such processes, usually sintering aids are used to lower the sintering temperatures. US 2011/003212 A, US 2012/015234, JP 2225310 A and JP 2302307A all describe the use of a boron containing component (B₂O₃) as a sintering aid. The described use of sintering aids during the preparation of the lithium-ion conducting glass ceramics makes the preparation process more complicated and cost-intensive.

For preparing LATP, melting with quenching or wet-chemical synthesis are usable. During quenching, the LATP phase is crystallizing rapidly, and the sintering behaviour of the milled powder with a sintering temperature of -1040 °C are comparable between synthesis and melting technique. The high sintering temperature is needed to realize the highest Li-ion conductivity of 10⁻⁴-10⁻³S x cm⁻¹. In combination with typical cathode materials such as Ni-rich LiMO₂ (M = Ni, Co, Mn), the LATP electrolyte have to be compatible during sintering. Therefore, the sintering temperature must be reduced dramatically for avoiding reactions between active material and electrolyte.

The article "Synthesis and Characterization of Lithium-Ion Conductive LATP-LaPO4 Composites Using La2O3 Nano-Powder," Song, F.; Uematsu, M.; Yabutsuka, T.; Yao, T.; Takai, S., Materials 2021,14, 3502 describes LATP-based composite electrolytes which are prepared by sintering the mixtures of LATP precursor and La₂O₃ nano-powder. Based on the preparation procedure, the resulting composite material is fully crystalline.

### Brief Description of the Drawings

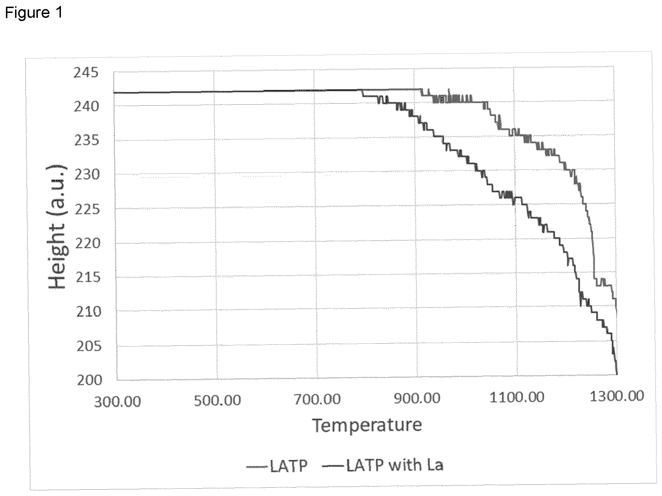

Figure 1 shows the shrinkage behaviour of the pressed tablet produced according to the Example when heated via a heating microscope.

Starting from this prior art, the present invention focusses in a first aspect on the provision of lithium-ion conducting glass ceramics, in which lower sintering temperatures can be used. In this regard, in particular sintering temperatures below 800 °C are of interest.

In a second independent aspect, the present invention focusses on the provision of lithium-ion conducting glass ceramics which can be prepared without the formation of unwanted phases, such as AlPO₄. In the sense of the present invention, unwanted phases are to be understood as separate phases which do not or only to a small extent contribute to the electrical conductivity.

In a third independent aspect, the present invention focusses on the provision of lithium-ion conducting glass ceramics which can be prepared without the addition of a sintering aid in order to avoid the use of electrical energy and high production costs.

In a fourth independent aspect, the present invention focusses on the provision of lithium-ion conducting glass ceramics which can be prepared by avoiding cost-intensive techniques like vacuum deposition methods.

In a fifth independent aspect, the present invention focusses on the provision of a material which is suitable for the use as an electrolyte in all-solid-state batteries and as composite material for the use as a cathode material, in particular in combination with Nickel Cobalt Manganese Oxide (NCM) cathode active materials for reducing the required sintering temperature of the NCM material.

These objects underlying the present invention are solved independently and preferably together by a lithium-ion conducting glass ceramic, comprising
▪ a first crystalline phase, comprising

| | |
|---|---|
| P₂O₅: | 26 to 44 mol%, |
| TiO₂: | 34 to 52 mol%, |
| one or more oxides selected from the group, consisting of La₂O₃, Y₂O₃, Yb₂O₃, and Nb₂O₃: | 0.2 to 10 mol% |
| Li₂O | 10 to 24 mol%, |
| Al₂O₃ | 0.6 to 10 mol% |

and
▪ a second crystalline phase of lanthanum phosphate.

In the present invention, it has been found out that the addition of La₂O₃ stabilizes glass phases, whereby a partial substitution of La³⁺ by Ti⁴⁺ in the first crystalline phase providing a crystalline phase of Li_{1.1+x+y}AlₓLa_{y}Ti_{1.3+(x+y)}(PO₄)₃(LATP) leads also to the formation of the second crystalline phase of lanthanum phosphate. This substitution is assumed to be beneficial enhancing the electrical conductivity of the sample.

The compositions according to the present invention have higher crystallization temperatures of above 660 °C which distinguishes them from other melt derived Li₁₊ₓAlₓTi₂₋ₓ(PO₄)₃ compositions which have crystallization temperatures typically mostly below 660 °C.

In the present invention, a partial substitution of Al by La of LATP resulting in above-mentioned two crystalline phases provides for getting higher amorphous content by melting and quenching leading to the improved characteristics.

In a preferred embodiment, the amount of the amorphous phase in the claimed composite material is preferably above 50 wt.-%, more preferably above 55 wt.%, more preferably above 60 wt.-%, most preferably above 65 wt.-%.

Without being bound by a theory, it is assumed that said amorphous phase is formed by non-stochiometric LATP (lanthanum-rich phase).

The presence of an amorphous phase, in particular in the claimed range, leads to the technical advantage that a lower sintering temperature is required for dense solidification.

In the present invention, the lithium-ion conducting glass ceramic can be prepared from the raw materials lithium carbonate, lithium phosphate, titanium oxide, ammonium phosphate, phosphoric acid, and lanthanum oxide. Thereby, the following amounts are realized in the final product:
The amount of the components titanium oxide and phosphorous oxide in the lithium-ion conducting glass ceramic according to the present invention are - in an aspect of the present invention - preferably
▪ TiO₂: 34 to 52 mol%; and
▪ P₂O₅: 26 to 44 mol%.

The amount of the components titanium oxide and phosphorous oxide in the lithium-ion conducting glass ceramic according to the present invention are - in a further aspect of the present invention - more preferably
▪ TiO₂: 36 to 50 mol%; and
▪ P₂O₅: 28 to 42 mol%.

The amount of the components titanium oxide and phosphorous oxide in the lithium-ion conducting glass ceramic according to the present invention are - in a further aspect of the present invention - most preferably
▪ TiO₂: 38 to 48 mol%; and
▪ P₂O₅: 30 to 40 mol%.

The amount of the component lithium oxide in the lithium-ion conducting glass ceramic according to the present invention is - in an aspect of the present invention - preferably
▪ Li₂O: 10 to 24 mol%.

The amount of the component lithium oxide in the lithium-ion conducting glass ceramic according to the present invention is - in a further aspect of the present invention - more preferably
▪ Li₂O: 12 to 22 mol%.

The amount of the component lithium oxide in the lithium-ion conducting glass ceramic according to the present invention is - in a further aspect of the present invention - most preferably
▪ Li₂O: 14 to 20 mol%.

The amount of the component lanthanum oxide in the lithium-ion conducting glass ceramic according to the present invention is - in an aspect of the present invention - preferably
▪ La₂O₃: 0.2 to 10 mol%.

The amount of the component lanthanum oxide in the lithium-ion conducting glass ceramic according to the present invention is - in a further aspect of the present invention - more preferably
▪ La₂O₃: 0.4 to 8 mol%.

The amount of the component lanthanum oxide in the lithium-ion conducting glass ceramic according to the present invention is - in a further aspect of the present invention - most preferably
▪ La₂O₃: 0.6 to 6 mol%.

The amount of the component aluminium oxide in the lithium-ion conducting glass ceramic according to the present invention is - in an aspect of the present invention - preferably
▪ Al₂O₃: 0.6 to 10 mol%.

The amount of the component aluminium oxide in the lithium-ion conducting glass ceramic according to the present invention is - in a further aspect of the present invention - more preferably
▪ Al₂O₃: 0.8 to 8 mol%.

The amount of the component aluminium oxide in the lithium-ion conducting glass ceramic according to the present invention is - in a further aspect of the present invention - most preferably
▪ Al₂O₃: 1 to 6 mol%.

In one example of the present invention, the lithium-ion conducting glass ceramic according to the present invention comprises the following components:
▪ TiO₂: 38 to 48 mol%;
▪ P₂O₅: 26 to 44 mol%;
▪ Li₂O: 10 to 24 mol%;
▪ La₂O₃: 0.2 to 10 mol%; and
▪ Al₂O₃: 0.6 to 10 mol%.

In one example of the present invention, the lithium-ion conducting glass ceramic according to the present invention comprises the following components:
▪ TiO₂: 34 to 52 mol%;
▪ P₂O₅: 30 to 40 mol%;
▪ Li₂O: 10 to 24 mol%;
▪ La₂O₃: 0.2 to 10 mol%; and
▪ Al₂O₃: 0.6 to 10 mol%.

In one example of the present invention, the lithium-ion conducting glass ceramic according to the present invention comprises the following components:
▪ TiO₂: 34 to 52 mol%;
▪ P₂O₅: 26 to 44 mol%;
▪ Li₂O: 14 to 20 mol%;
▪ La₂O₃: 0.2 to 10 mol%; and
▪ Al₂O₃: 0.6 to 10 mol%.

In one example of the present invention, the lithium-ion conducting glass ceramic according to the present invention comprises the following components:
▪ TiO₂: 34 to 52 mol%;
▪ P₂O₅: 26 to 44 mol%;
▪ Li₂O: 10 to 24 mol%;
▪ La₂O₃: 0.6 to 6 mol%; and
▪ Al₂O₃: 0.6 to 10 mol%.

In one example of the present invention, the lithium-ion conducting glass ceramic according to the present invention comprises the following components:
▪ TiO₂: 34 to 52 mol%;
▪ P₂O₅: 26 to 44 mol%;
▪ Li₂O: 10 to 24 mol%;
▪ La₂O₃: 0.2 to 10 mol%; and
▪ Al₂O₃: 1 to 6 mol%.

In one mode of the present invention, the lithium-ion conducting glass ceramic according to the present invention is devoid of intentional additions of any form of at least one of bismuth, lead, silicon and cadmium oxides because cadmium and lead have health risk, and bismuth is not electrochemically stable.

The lithium-ion conducting glass ceramic according to the present invention is characterized by the above-mentioned constituents in the respective amounts.

In the present invention, the lithium-ion conducting glass ceramic is defined by the presence of a first and second crystalline phase, whereby the first crystalline phase is the main crystalline phase, and the second crystalline phase is the minor crystalline phase.

The above-described lithium-ion conducting glass ceramic according to present invention has a temperature of the beginning of crystallization (Tₓ) of preferably above 660 °C, more preferably above 680 °C, even more preferably above 700 °C, most preferably above 720 °C. This temperature of the beginning of crystallization (Tₓ) allows a broader processing window to be used in the present invention as compared with the prior art. The higher the Tₓ temperature, the wider the process window to sinter the material to a dense body at a lower temperature with less porosity.

The lithium-ion conducting glass ceramic according to the present invention can be examined by X-ray diffraction.

Thereby, the first crystalline phase of the lithium-ion glass ceramic according to the present invention has XRD peaks at 2-theta angles of 24.5 and 20.7.

Moreover, the second crystalline phase of the lithium-ion glass ceramic according to the present invention has XRD peaks at 2-theta angles of 28.5 and 26.7.

The above-described lithium-ion conducting glass ceramic according to the present invention has a glass transition temperature (T_{g}) in the range of 500 to 610 °C, preferably in the range of 520 to 610 °C, of the amorphous phase in the claimed composite material.

The above-described lithium-ion conducting glass ceramic according to the present invention has a difference between the glass transition temperature (T_{g}) and the temperature of the beginning of crystallization (Tₓ) of equal or above 80 °C, preferably equal or above 100 °C, more preferably equal or above 110 °C. This difference between the glass transition temperature (T_{g}) and the temperature of the beginning of crystallization (Tₓ) allows a convenient process window for the sintering step.

Moreover, the conductivity of the lithium-ion conducting glass ceramic according to the present invention is in a range of 100 to 800 µS/cm, most preferably in a range of 300 to 800 µS/cm.

The present invention also relates to the use of the above-described lithium-ion conducing glass ceramic in a battery, in particular in an all-solid-state battery, a solid electric cell, and lithium-ion conducting separators.

Moreover, the present invention relates to the use of the above-described lithium-ion conducting glass ceramic as a cathode material.

That said, one further subject-matter of the present invention is an all-solid-state battery, a solid electric cell, and a lithium-ion conducting separator which comprises the above-mentioned lithium-ion conducting glass ceramic.

The lithium-ion conducting glass ceramic according to the present invention can be prepared according to the following method:
The raw materials lithium carbonate, titanium oxide, ammonium phosphate and lanthanum oxide are used in the above-mentioned amounts and are then molten in alumina crucibles at a temperature of up to 1480 °C. The quenched material is then milled, preferably in an air-jet mill.

The above-mentioned method of producing a lithium-ion conducting glass ceramic according to the present invention comprises in a first aspect in particular the following steps:
▪ combining in an aluminium-free reaction vessel a composition of
   ▪ P₂O₅ in an amount of 26 to 44 mol%,
   ▪ TiO₂ in an amount of 34 to 52 mol%;
   ▪ La₂O₃ in an amount of 0.2 to 10 mol%
   ▪ Li₂O in an amount of 10 to 24 mol%; and
   ▪ Al₂O₃ in an amount of 0.6 to 10 mol%;
   to form a mixture,
▪ heating the mixture to no greater than 900 °C so that the mixture is melted, and
▪ cooling and/or quenching the heated mixture to ambient temperature.

In this method, the mixture is heated to a temperature of preferably no greater than 800 °C, more preferably no greater than 700 °C, even more preferably no greater than 680 °C.

Moreover, in this method a forced cooling is used to prevent fully crystallization. The cooling rate depends on type of cooling, but is usually above 100 °C/s from melt temperature to glass transition temperature.

The above-mentioned method of producing a lithium-ion conducting glass ceramic according to the present invention comprises in a second aspect in particular the following steps:
▪ combining in an aluminium-free reaction vessel a composition of
   ▪ P₂O₅ in an amount of 26 to 44 mol%,
   ▪ TiO₂ in an amount of 34 to 52 mol%;
   ▪ La₂O₃ in an amount of 0.2 to 10 mol%
   ▪ Li₂O in an amount of 10 to 24 mol%; and
   ▪ Al₂O₃ in an amount of 0.6 to 10 mol%;
   ▪ to form a mixture,
▪ subjecting the mixture to a sintering process.

It is possible, that in both methods described above the mixture to be used further comprises 0 to 5 mol% Al₂O₃.

In both methods, the dried powder is then usually milled, for example by air-jet milling, to powder form to a d50 value of 0.1 to 5.0 µm, preferably 0.5 to 3.0 µm, more preferably 1.0 to 1.5 µm. This particle size distribution is desired because it also enhances the sinterability of the material.

These methods are in particular suitable for the preparation of the above-mentioned lithium-ion conducting glass ceramic.

That said, the present invention also relates to the above-mentioned lithium-ion conducting glass ceramic which are obtainable by the above-described methods.

### Example:

A raw material composition of the below substances is weighed in and mixed to a homogeneous batch. After the mixing process the raw material batch is molten in a melting furnace at 1470 °C for 45 minutes. In this example, Pt crucibles have been chosen, but other crucibles are also usable. Lithium phosphate is more advantageous to use instead of Lithium carbonate to lower Lithium loss during melting.

| | |
|---|---|
| **Lithium phosphate** | 11.24 wt.-% |
| **Aluminium Metaphosphate** | 16.13 wt.-% |
| **La₂O₃** | 5.24 wt.-% |
| **TiO₂** | 27.80 wt.-% |
| **Ammonium phosphate** | 39.60 wt.-% |
| | 100 wt.-% |

After the desired dwell time of 45 minutes the melt is quenched in water and dried at 125 °C. In this example the amorphous content was 70%

The dried powder is then air-jet milled to powder form to a d50 value of 1 - 1.5 µm. This small and narrow particle size distribution is desired because it also enhances the sinterability of the material. The powder is then pressed to a tablet and observe the shrinkage behaviour of the pressed tablet via a heating microscope according to Figure 1.

Conductivity measurements conducted on sintered tablets at 800-900°C gave an ionic conductivity of 4 x 10⁻⁴ S/cm.

## Claims

1. A lithium-ion conducting glass ceramic, comprising as
▪ a first crystalline phase, comprising
| | |
|---|---|
| P₂O₅: | 26 to 44 mol%, |
| TiO₂: | 34 to 52 mol%, |
one or more oxides selected from the group, consisting 0.2 to 10 mol% of La₂O₃, Y₂O₃, Yb₂O₃, and Nb₂O₃:
| | |
|---|---|
| Li₂O | 10 to 24 mol%, |
| Al₂O₃ | 0.6 to 10 mol% |
and
▪ a second crystalline phase of lanthanum phosphate.

2. The lithium-ion conducting glass ceramic according to claim 1, **characterized in that** the ceramic comprises
▪ TiO₂: 34 to 52 mol%; and
▪ P₂O₅: 26 to 44 mol%.

3. The lithium-ion conducing glass ceramic according to claim 1 or 2, **characterized in that** the ceramic further comprises
▪ Li₂O in an amount of 10 to 24 mol%.

4. The lithium-ion conducting glass ceramic according to any one of claims 1 to 3, **characterized in that** the ceramic further comprises
▪ La₂O₃ in an amount of 0.2 to 10 mol%.

5. The lithium-ion conducting glass ceramic according to any one of claims 1 to 4, **characterized in that** the ceramic further comprises
▪ Al₂O₃ in an amount of 0.6 to 10 mol%.

6. The lithium-ion conducting glass ceramic according to any one of claims 1 to 5, **characterized in that** the first crystalline phase is the main crystalline phase and the second crystalline phase is the minor crystalline phase.

7. The lithium-ion conducting glass ceramic according to any one of claims 1 to 6, **characterized in that** the ceramic has a temperature of beginning of crystallization (Tₓ) of above 660 °C, more preferably above 680 °C, even more preferably above 700 °C, even more preferably above 720 °C.

8. The lithium-ion conducting glass ceramic according to any one of claims 1 to 7, **characterized in that** the first crystalline phase has XRD peaks at 2-theta angles of 24.5 and 20.7.

9. The lithium-ion conducting glass ceramic of any of any one of claims 1 to 8, **characterized in that** the second crystalline phase has XRD peaks at 2-theta angles of 28.5 and 26.7.

10. The lithium-ion conducting glass ceramic according to any one of claims 1 to 9, **characterized in that** the amorphous phase in the lithium-ion conducting glass ceramic has a glass transition temperature (T_{g}) in the range of 500 to 610 °C.

11. The lithium-ion conducting glass ceramic according to any one of claims 1 to 10, **characterized in that** the conductivity of the lithium-ion conducting glass ceramic is in a range of 100 to 800 µS/cm.

12. The lithium-ion conducting glass ceramic according to any one of claims 1 to 11, **characterized in that** the glass ceramic has a difference between the glass transition temperature (T_{g}) and the temperature of the beginning of crystallization (Tₓ) of equal or above 80 °C.

13. A battery, in particular an all-solid-state battery, a solid electric cell, a lithium-ion conducting separator, or a cathode material, comprising a battery comprising the glass ceramic of any of claims 1 to 12.

14. A method of producing a lithium-ion conducting glass ceramic, comprising the following steps:
▪ combining in an aluminium-free reaction vessel a composition of
| | |
|---|---|
| P₂O₅: | 26 to 44 mol%, |
| TiO₂: | 34 to 52 mol%, |
one or more oxides selected from the group, consisting 0.2 to 10 mol% of La₂O₃, Y₂O₃, Yb₂O₃, and Nb₂O₃:
| | |
|---|---|
| Li₂O | 10 to 24 mol%, |
| Al₂O₃ | 0.7 to 10 mol% |
to form a mixture,
▪ heating the mixture to no greater than 900 °C so that the mixture is melted, and
▪ cooling and/or quenching the heated mixture to ambient temperature.

15. A method of producing a lithium ion conducting glass ceramic, comprising the following steps:
▪ combining in an aluminium-free reaction vessel a composition of
| | |
|---|---|
| P₂O₅: | 26 to 44 mol%, |
| TiO₂: | 34 to 52 mol%, |
one or more oxides selected from the group, consisting 0.2 to 10 mol% of La₂O₃, Y₂O₃, Yb₂O₃, and Nb₂O₃:
| | |
|---|---|
| Li₂O | 10 to 24 mol%, |
| Al₂O₃ | 0.8 to 10 mol% |
to form a mixture,
▪ subjecting the mixture to a sintering process.
